# EUROPEAN PATENT APPLICATION

(11) **EP 2 402 929 A1**
(43) Date of publication of application: **04.01.2012**
(21) Application number: 10425221.8
(22) Date of filing: 30.06.2010
(51) Int. Cl.: G09G 3/20

(54) **An electronic label**

(71) Applicant: S5 Tech S.r.L, 20144 Milano (IT)
(72) Inventor: Del Sorbo, Gabriele, 21057 Olgiate Olona (Varese) (IT)
(74) Representative: Lunati & Mazzoni S.r.L.

(57) **Abstract**

It is disclosed an electronic label (1) adapted to be disposed on a flat board (101) of a shelf (100) comprising a plurality of types of products (102), said electronic label (1) including: an indication screen (2) adapted to display information relating to a plurality of types of products (102), control means (4) intended for operation of the electronic label (1), at least one antenna (3) for connecting the electronic label (1) to a control unit.

## Description

The present invention relates to an electronic label of the type pointed out in the preamble of the first claim.

It is known that it is customary for the points of sale to exhibit prices or other information concerning the goods or products through paper labels mounted on shelves reproducing at least the price and the bar code identifying a single type of product.

With this type of labels each time there is a variation in the price or arrangement of the products, the operators of the point of sale must remove the old labels and replace them with new labels. This operation needs money and is time-consuming for the point of sale.

For the above reason paper labels are more and more frequently replaced by electronic labels characterised by the possibility of remotely updating the price of the product.

These electronic labels are provided with a screen, usually a liquid-crystal screen or display, a communication system adapted to enable the information reproduced on the display to be modified, and a battery power system.

For use of the electronic labels a single starting positioning is required which task is performed by a responsible person or operator that places a label close to each product present in the point of sale.

When positioning of the labels has been completed, it is sufficient to use a central unit for controlling and modifying the information reproduced on each label. For instance, when the price of a product is modified, the responsible person reproduces this modification on the central unit that then sends it to the electronic label through the air.

Once the information has reached the label, updating of the label occurs and the new price of the product is shown.

The above described known art has some important drawbacks.

In fact, positioning and maintenance of all the electronic labels is difficult and wearisome.

In addition, the operator is not able to know the state of an electronic label without visually controlling it. Therefore, in a point of sale the presence of non-working labels is possible, without the operator knowing it, which is very dangerous, in terms of time and money, for the point of sale itself.

Another problem is represented by the impossibility of knowing in an automatic manner whether a label is positioned correctly or whether, due to a push or an impact for example, has changed its place and therefore the customer is unable to know the price of a product.

For the above reasons, the responsible person must frequently check the state of all the labels.

In addition, there is a problem connected with stealing of the labels; in fact the electronic labels represent an advanced technology and are seen as a valuable element that, however, is not inserted in the supermarket's context. Another problem of presently known electronic labels is represented by the impossibility of reading them through optical readers because it is not possible to read a bar code reproduced on the screen using these readers.

For the above reason a bar code is usually attached externally of the electronic labels to enable said reading.

Another important problem typical of the electronic labels is the limited duration of these labels due to the high energy consumption.

A further problem is represented by the reduced impermeability of the electronic labels, which makes it difficult and expensive to position them in a freezer or other similar places characterised by the formation of drops or steam that may damage them.

For the above reason the electronic labels adapted to be used in such places are usually enclosed in an envelope preventing a dangerous water seepage but making the aesthetic appearance of said labels worse.

In addition, the presently known labels are always and in any case physical objects logically linked to a product and consequently for adding or removing a product from a shelf, physical addition or elimination of an electronic label is always required.

Another important problem of the presently known electronic labels is represented by the fact that they have an aesthetic appearance of low quality. Under this situation, the technical task underlying the present invention is to conceive an electronic label capable of substantially obviating the mentioned drawbacks.

Within the scope of this technical task, it is an important aim of the invention to provide an electronic label that does not require visual controls by a responsible person.

In particular, the invention aims at conceiving an electronic label allowing the user to know the operation state and position of same without carrying out a visual control.

Another important aim of the invention is to make available an electronic label easily usable in any place and of high reliability.

A further aim is to introduce electronic elements that are able to prevent the labels from leaving the supermarket, due to being stolen.

Another aim is to make an electronic label of pleasant appearance and high quality.

Finally, the inventive label must be cheap and practical.

The technical task mentioned and the aims specified are achieved by an electronic label as claimed in the appended claim **1**.

Preferred embodiments are highlighted in the sub-claims.

The features and advantages of the invention are hereinafter clarified by the detailed description of a preferred embodiment of the invention, with reference to the accompanying drawings, in which:
**Fig. 1** shows a portion of the electronic label according to the invention;
**Fig. 2** shows a shelf provided with a plurality of electronic labels;
**Fig. 3** is an axonometric view of the electronic label; and
**Fig. 4** shows a front view of a particular electronic label according to the invention.

With reference to the drawings, the electronic label according to the invention is generally identified by reference numeral **1**.

It is usable in points of sale of various sizes, and in particular with big supermarkets or points of sale of small and medium sizes comprising shelves **100** including flat boards **101** supporting different types of products **102** on sale.

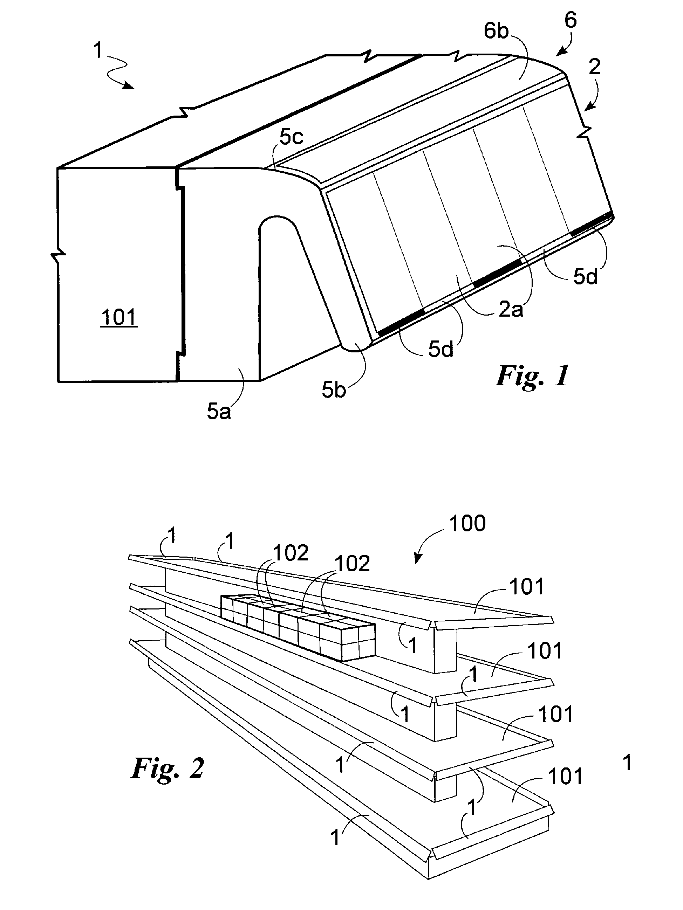

It can be secured to the flat boards **101** and is adapted to display information, such as in particular prices, bar codes, advertising, offers, promotions and the like, relating to the products **102** disposed on said flat boards **101**, as shown in **Fig. 2**, or other products present or not in the point of sale.

The electronic label 1 briefly comprises an indication screen **2**, connection means 3 adapted to connect label 1 to a control unit, control means **4** intended for operation of label 1, a holding structure **5** adapted to substantially contain the elements constituting label **1** and electric power means **6** for supplying electricity to label 1.

The indication screen 2 is advantageously adapted to show at least information concerning a plurality of types of products 102 located on a flat board 101. The indication screen 2 is further adapted to exhibit advertisements, sales promotions or other sale activities belonging to the business.

It is therefore longer than 2 dm and more preferably longer than 5 dm, and most preferably its length is included between 5 dm and 3 m.

It therefore suitably has an extension in length exceeding 30% of the extension of the shelf and more preferably exceeding 80%; most preferably the length covered by the indication screen 2 is substantially equal to the length of the flat board 101.

In addition and advantageously, the screen 2 is virtually and operatively divided into a plurality of sectors **2a**, as shown in the preferred example in Fig. 1.

Each sector **2a** represents a single item of information concerning one type of products 102 or, alternatively, a sector **2a** represents only part of said information, which consists of a plurality of sectors **2a**. In conclusion, on an indication screen it is possible to simultaneously identify sectors **2a** quoting the price or bar code of one or more products and sectors **2a** showing advertisements or offers.

Sectors 2a are adapted to be controlled in an independent manner so as to enable operations suitable to modify the indication screen 2 even only partly. In addition, sectors 2a can be visually recognised by means of a graduated scale **5d** present on structure 5 (Fig. 1) or electronically through use of a RFID tag.

In particular, some of sectors 2a are selectively modifiable leaving the others unchanged, which allows the energy consumption of the electronic label 1 to be reduced, as better specified hereinafter.

The indication screen 2 preferably uses a technology of the e-paper (electronic paper) type, also known as e-ink, or alternatively a technology of the OLED (Organic Light Emitting Diode) type or also LCD type.

As known, in fact, the e-paper technology screens do not require any backlight and are characterised by minimum energy requirements. In addition, a screen with an e-paper technology is able to display text and images over long periods of time substantially without any energy waste. In conclusion, this indication screen 2 substantially only requires energy when the information displayed thereon is to be modified. The e-paper technology screens are further adapted to reflect the light and enable the optical readers presently used to read bar codes or other information that can be reproduced on the screen itself.

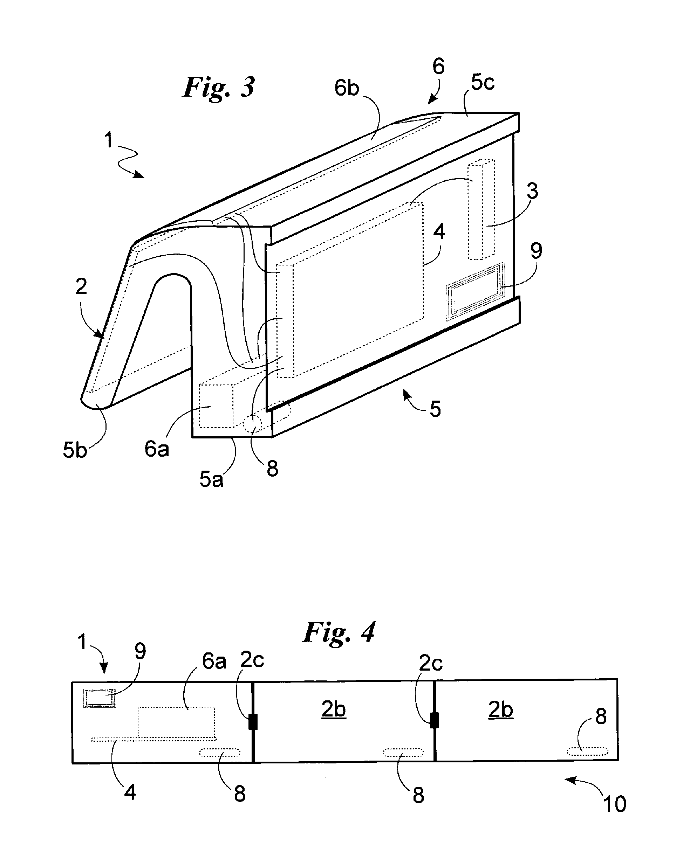

Finally, the screen 2 can be divided into a plurality of separable portions **2b**, one of which is internal to the holding structure 5 while the remaining portions can be structurally and operatively connected thereto by suitable attachment means **2c**, as shown in Fig. 4. In addition, suitable attachment means **2c** can be used for connecting a plurality of electronic labels 1 in a longitudinal or vertical direction.

The connection means 3 is adapted to enable control of label 1 by an external unit, such as the control unit, that can be controlled by a responsible person. Said means preferably consists of an antenna and a transceiver circuit for aerial electromagnetic waves, i.e. not through a cable, to a frequency of about 2.4 GHz, more particularly adapted to communicate with the protocol known with the trade name ZigBee and communicating with the protocol IEEE 802.15.4.

The control means 4, known by itself or obtainable by a person skilled in the art, consists of an electronic card and the like. Said means is adapted to control the electronic label 1 and in particular the screen 2 and to receive and transmit information through the connection means 3.

The control means 4 is further adapted to operate partial modifications of the information reproduced on the indication screen 2. It is in particular adapted to selectively modify one sector 2a or a plurality of sectors 2a constituting the screen 2 leaving the other sectors unchanged, as previously said. The means 4 is further suitable to operate the full modification of the indication screen 2.

The electric power means 6 preferably comprises a battery **6a** and photovoltaic cells **6b.** In particular, the battery 6a is adapted to directly power label 1, while the cells 6b are adapted to recharge battery 6a. In particular, the battery 6a is of the rechargeable type and the photovoltaic cells 6b are advantageously disposed at least on the upper part of the holding structure 5, as better specified in the following. Alternatively, the electric power means 6 can comprise a connection to an external electric network or a connection to a high-capacity electric battery suitably concealed in the shelf or the like and used by one or a plurality of labels.

The holding structure 5 is preferably divided into two portions: a fixed portion **5a** that can be secured to the flat board 101 preferably in a releasable manner, and a projecting portion **5b** separated from the preceding one. More specifically, the projecting portion 5b is preferably inclined to the first portion 5a to which it is joined by an upper profile **5c**. In detail, engaged on the projecting portion 5b is the indication screen 2, the photovoltaic cells 6b being disposed on the upper profile 5c and the remaining components being placed inside the fixed portion 5a.

For checking the correct operation and positioning of the electronic label 1, it further comprises detection means **7** adapted to allow its physical state to be identified, and a location element **8** adapted to enable its correct positioning to be verified, as shown in Fig. 3.

The detection means 7 is adapted to recognise the physical state, i.e. the level of wear of the components of the electronic label 1. In particular, said means is adapted to evaluate the physical state of the battery 6a and also of the indication screen 2.

The detection means consists of one or more known elements, such as a voltmeter that, measuring the potential difference between two points in a circuit, determines the physical state of the battery 6. Alternatively, this measure can be directly detected by the control means **4**.

The location element 8 is adapted to verify the correct positioning of the electronic label 1 and therefore to detect a possible movement of same. This location element 8 preferably consists of an accelerometer, i.e. a measurement instrument capable of detecting the acceleration of the electronic label 1, of an inclinometer, adapted to detect the inclination of the electronic label 1 relative to the ground, or of another similar device for carrying out said detection.

In addition, the location element 8 is adapted to operate, through the control means 4, switching off of the electronic label 1 when it is for example overturned, thus avoiding an unnecessary energy consumption when the electronic label 1 is not used. The overturned position of the label in addition acts as a physical switch, so that keys, buttons or the like (including apertures, although of small sizes, or requiring a waterproofing operation) are not present, which keys could jeopardise the impermeability of same.

It is also possible to dispose a location element 8 for each separable portion 2b of the screen 2.

The electronic label 1 can further include at least one recognition element **9** adapted to allow a responsible person to recognise the electronic label 1. The electronic label 1 can comprise a plurality of recognition elements 9 suitably spaced apart so as to enable the products placed close to the electronic label 1 to be individually and quickly identified. For instance, it is possible to arrange a recognition element 9 for each separable portion 2b of the screen or, alternatively, for each sector 2a. This recognition element 9 is preferably of the passive type, or also of the active type, so as to limit the energy consumption of the electronic label 1. In detail, it is a passive RFID tag, i.e. a microchip, that is excited upon passage of a magnetic reader emitting a radio signal. The signal activates the microchip and supplies it with the energy necessary for replying to the reader, transmitting it back a response signal containing the information stored in the microchip. Alternatively, the recognition element 9 is a bar code or an alphanumeric code.

Operation of the electronic label 1, described above as regards its structure, is the following.

The electronic labels 1 are secured to the flat boards 101 of shelves 100 containing the products 102.

Subsequently, through the control unit, a responsible person sends to each electronic label 1 present in the point of sale, the information relating to the products disposed at the electronic label 1, such as the price for example. During this step other information concerning said products, such as concerning sales promotions or offers of the point of sale or others can be sent, for example sales promotions carried out in the point of sale itself or in another.

When the information reproduced in one or more of the screens 2 is wished to be modified, due to a change of positioning or price of a product 102 for example, the responsible person, through the control unit, operates the modification of a portion, and in particular of one or more sectors 2a of the corresponding electronic label 1. In detail, the control unit sends the information to label 1 that will operate the modifications of the sectors 2a containing the information to be amended, leaving the other sectors unchanged.

If an electronic label 1 or one of the separable portions 2b of the indication screen is moved from its correct position, when it comes off the flat board 101 for example and falls, the location element 8 is activated so that it detects the displacement and sends a warning signal to the control unit for signalling said change of position.

The control unit identifies the electronic label 1 and communicates the change of position to the responsible person that intervenes and repositions the electronic label 1.

If the responsible person of the point of sale has to verify inner data, such as amount of stocks, sell-by dates or others, said person uses a suitable control device in the region of the electronic label 1 and this device, interacting with the recognition element 9, identifies the electronic label 1. Once the operator has carried out the identification, the control device is brought into connection with the control unit for identifying the product and retrieving all necessary information.

If label 1 is provided with several recognition elements 9, the operator is able to directly identify the product. In particular, the operator places the control device a short distance from label 1 or in contact therewith, where there is the product to be checked. Therefore a single recognition element 9 is activated and a response signal enabling the product to be identified is sent.

Finally, the control unit due to the detection means 7, carries out monitoring of the physical state of each electronic label 1 present in the point of sale and is therefore able to inform the operator of a possible malfunction or of the fact that an electronic label 1 has exhausted its estimated lifetime.

The invention achieves important advantages.

Actually, the electronic label 1, due to the particular sizes characterising it, allows several products to be identified simultaneously, in fact virtualizing the electronic labels that are no longer linked to a single electronic support. These sizes enable the operator to carry out a visual control on positioning of the label in a quick manner. In addition, this control is performed automatically by the electronic label 1, so that the visual control of the operator is unnecessary.

In fact, the electronic label 1 allows the responsible person to known the operation state and position of the label itself without a visual control being required. In particular, the electronic label 1 is adapted to signal a malfunction or displacement thereof to the control unit, and therefore to the operator, in an almost instantaneous manner.

This advantage is obtained due to the presence of the detection means 7 and the location element 8 capable of evaluating both the physical state, i.e. deterioration of the main components, and the position or displacement of the electronic label 1.

A further advantage resulting from use of the electronic label 1 is given by the location element 8 allowing switching off of the electronic label 1 when it is overturned or in another state. Due to this possibility, there is no energy consumption when the electronic label 1 is not used and, for example, is stored and in addition the presence of keys, buttons or the like is avoided, which always includes apertures, even if small, or requires waterproofing and that can jeopardise the impermeability of the electronic label 1.

Another important advantage is represented by the long lifetime of the electronic label 1. This advantage is substantially obtained due to use of indication screens 2 of the e-paper or OLED type having particularly reduced energy consumptions. In particular, use of energy by the e-paper type only occurs when a modification of the represented information is carried out.

This energy reduction is also obtained due to the division of screen 2 into sectors 2a so that the exact screen portions to be modified are identified and therefore the energy required for receiving the modification of information is minimised, and also due to the optional presence of photovoltaic cells capable of supplying additional energy to the electronic label.

An important advantage is represented by the use of at least one recognition element 9 and, in particular, a passive RFID. This device not only allows the electronic label 1 to be identified, but also prevents the electronic label 1 from being taken away from the point of sale.

In fact, the recognition element 9 can be activated when it passes through normal antitheft devices present in a point of sale, so that an attempt of theft is signalled.

A further advantage due to use of said particular indication screens 2 is represented by the possibility of utilising optical readers for reading the bar codes or other information represented on the screens. Due to this aspect, inside the point of sale shopping or other similar operations requiring use of said optical readers can be carried out quickly.

Still another advantage is represented by the possibility of using the electronic label 1 everywhere. This advantage is due to the fact that the electronic label 1 is fully enclosed in the holding structure 5.

Not of less importance is the fact that the electronic label 1 has an aesthetic appearance of high quality, due to the particular holding structure 5.

The invention is susceptible of variations falling within the scope of the inventive idea. All of the details can be replaced by equivalent elements and the materials, shapes and sizes can be of any nature and magnitude.

## Claims

1. An electronic label (1) adapted to be secured to a flat board (101) of a shelf (100) of a point of sale comprising a plurality of types of products (102), said electronic label (1) including: an indication screen (2) adapted to display information, control means (4) intended for operation of the electronic label (1), connection means (3) for connecting said electronic label (1) to a control unit; **characterised in that** said indication screen (2) is adapted to display information relating to a plurality of said types of products (102).

2. An electronic label (1) as claimed in claim 1, wherein said indication screen (2) is longer than 2 dm.

3. An electronic label (1) as claimed in one or more of the preceding claims, wherein said indication screen (2) is longer than 30% of the length of said flat board (101).

4. An electronic label (1) as claimed in one or more of the preceding claims, wherein said control means (4) is adapted to operate a partial modification of said information displayed by said indication screen (2).

5. An electronic label (1) as claimed in the preceding claim, wherein said indication screen (2) is divided into a plurality of sectors (2a) adapted to be individually controlled and wherein each of said sectors (2a) is adapted to be updated in an independent manner.

6. An electronic label (1) as claimed in one or more of the preceding claims, wherein said indication screen (2) uses a technology of the e-paper type.

7. An electronic label (1) as claimed in one or more of claims 1-5, wherein said indication screen (2) uses a technology of the OLED type.

8. An electronic label (1) as claimed in one or more of the preceding claims, wherein said screen (2) comprises a plurality of separable portions (2b) mutually connectable in terms of structure and operation.

9. An electronic label (1) as claimed in one or more of the preceding claims, comprising a location element (8) adapted to verify the positioning of said electronic label (1).

10. An electronic label (1) as claimed in one or more of the preceding claims, comprising electric power means (6) including photovoltaic cells (6a).

11. An electronic label (1) as claimed in the preceding claim, comprising detection means (7) adapted to enable the physical state of at least said battery (6) to be recognised.

12. An electronic label (1) as claimed in one or more of the preceding claims, comprising at least one recognition element (9) adapted to enable identification of said electronic label (1), consisting of a passive RFID tag.
